# EUROPÄISCHE PATENTANMELDUNG

(11) **EP 1 065 041 A2**
(43) Veröffentlichungstag der Anmeldung: **03.01.2001**
(21) Anmeldenummer: 00112851.1
(22) Anmeldetag: 17.06.2000
(51) Int. Cl.: B29C 51/34

(54) **Maschine zum Tiefziehen von becherförmigen Behältern in einer Kunststoffolienbahn**

(30) Priorität: 30.06.1999 DE 29911270 U
(71) Anmelder: Maier Packaging GmbH, 83224 Grassau (DE)
(72) Erfinder: Maier, Stefan, 83250 Marquartstein (DE)
(74) Vertreter: Busse & Busse Patentanwälte

(57) **Zusammenfassung**

Eine Maschine zum Tiefziehen von becherförmigen Behältern (2) ist mit einem oberseitig von einer Kunststoffolienbahn (3) überlaufenen Formgehäuse (5) versehen. In diesem sind in Reihe angeordnete, sich zum Boden (8) hin konisch erweiternde und/oder zumindest eine Hinterschneidung aufweisende Formnester (9) ausgebildet. Das Formgehäuse (5) ist in gegenläufig auseinander- und aufeinanderzubewegbare Gehäuseteile (10,11) entlang einer vertikalen Teilungsebene (T) unterteilt, die mit einer gemeinsamen vertikalen Mittelebene der Formnester (9) zusammenfällt. Bei der erfindungsgemäßen Maschine ist die Teilungsebene (T) des Formgehäuses (5) parallel zur Laufrichtung (F) der Kunststoffolienbahn (3) ausgerichtet.

## Beschreibung

Die Erfindung betrifft eine Maschine zum Tiefziehen von becherförmigen Behältern in einer Kunststoffolienbahn gemäß dem Oberbegriff des Anspruchs 1.

Bei bekannten Maschinen zum Tiefziehen von becherförmigen Behältern, die im Querschnitt eine Hinterschneidungskontur aufweisen, umfaßt das Formgehäuse eine einzige quer zur Vorschubrichtung der Maschine ausgerichtete Reihe von Formnestern, und die beiden Gehäuseteile des Formgehäuses sind in bzw. entgegen der Vorschubrichtung in eine Entformungsstellung verlagerbar, so daß danach die Becher der Reihe entnommen und weitergeführt werden können. Bei solchen Formgehäusen zur Becherformung ist ein jeweils über dem Verschiebebereich der Gehäuseteile befindlicher Bereich der Kunststoffolie nicht für die Becherformung verfügbar, so daß bereits bei einer Becher-Reihe wegen des benötigten Reihenabstandes ein erheblicher Verlust an Kunststoffolie zu verzeichnen ist, der sich noch bedeutend erhöhen würde, wenn das Formghäuse zwei Querreihen von Formnestern enthielte.

Die Erfindung befaßt sich mit dem Problem, eine Maschine zum Tiefziehen von becherförmigen Behältern mit Hinterschneidungskontur in einer Kunststoffolienbahn zu schaffen, die mit geringem technischen Aufwand und Folienabfall eine Herstellung von Bechern in mehreren Reihen in jedem Arbeitstakt ermöglicht.

Die Erfindung löst dieses Problem mit einer Vorrichtung mit den Merkmalen des Anspruchs 1. Hinsichtlich wesentlicher weiterer Ausgestaltungen wird auf die Ansprüche 2 bis 16 verwiesen.

Die erfindungsgemäße Maschine zum Tiefziehen von Behältern in Form von insbesondere gegenkonisch erweiterten Bechern ist als mehrgliedrige Baueinheit ausgebildet, die mit mehreren jeweils parallel zur Laufrichtung der Kunststoffolie ausgerichtete Teilungsebenen aufweisenden Formgehäusen versehen ist, deren gegenläufig auseinander- oder aufeinanderzubewegbare Gehäuseteile in jedem Arbeitstakt der Maschine als Formeinheit zusammenwirken, und dabei in Folienlaufrichtung mehrere Becher-Längsreihen gleichzeitig formen.

Die Formgehäuse können in Laufrichtung der Kunststoffolienbahn mit einer an die Weiterbearbeitung optimal angepaßten Anzahl von Formnestern versehen und mit geringem technischen Aufwand an kundenspezifische, unterschiedliche Produktivitätsforderungen, angepaßt werden, wobei die Anzahl der je Arbeitstakt formbaren gegenkonischen oder Hinterschneidungen aufweisenden Form-Becher erheblich erhöht werden kann.

Bei der erfindungsgemäßen Ausbildung und Anordnung der Formgehäuse ist eine Zuführung der Kunststoffolie in Form eines gesonderten Folienbahnstreifens zu jedem Formgehäuse vorteilhaft, da dessen Umformung im jeweiligen Formgehäuse weitgehend verlustarm möglich ist und eine wesentliche Einsparung an Kunststoffolien-Material erbringt.

Weitere Einzelheiten und vorteilhafte Ausgestaltungen ergeben sich aus der nachfolgenden Beschreibung und der Zeichnung, in der ein Ausführungsbeispiel des Gegenstandes der Erfindung näher veranschaulicht ist. In der Zeichnung zeigen:
- Fig. 1: eine Seitenansicht einer Maschine zum Tiefziehen von becherförmigen Behältern in einer Kunststoffolienbahn während einer Umformphase,
- Fig. 2: eine teileweise geschnittene Draufsicht auf die Maschine gemäß Fig. 1,
- Fig. 3: eine Schnittdarstellung der Maschine im Bereich eines Formghäuses gemäß einer Linie III-III in Fig. 2,
- Fig. 4: eine Seitenansicht ähnlich Fig. 1 beim Öffnungsvorgang der Maschine mit geformten Behältern im Formgehäuse,
- Fig. 5: eine Draufsicht auf die Maschine gemäß Fig. 4,
- Fig.6: eine Schnittdarstellung gemäß einer Linie VI-VI in Fig. 5,
- Fig. 7: eine Seitenansicht ähnlich Fig. 4 beim Folienvorschub in das Formgehäuse,
- Fig. 8: eine Draufsicht auf die Maschine gemäß Fig. 7,
- Fig. 9: eine Schnittdarstellung gemäß einer Linie IX-IX in Fig. 8,
- Fig. 10: eine Stirnansicht in Laufrichtung der Maschine mit jeweiligen randseitig geführten Bechern gemäß einer Linie X-X in Fig. 8,
- Fig. 11: eine Stirnansicht der Maschine mit mehreren geöffneten Formgehäusen gemäß einer Linie XI-XI in Fig. 12, und
- Fig. 12: eine Draufsicht auf mehrere in Öffnungsstellung befindlichen Formgehäuse der Maschine.

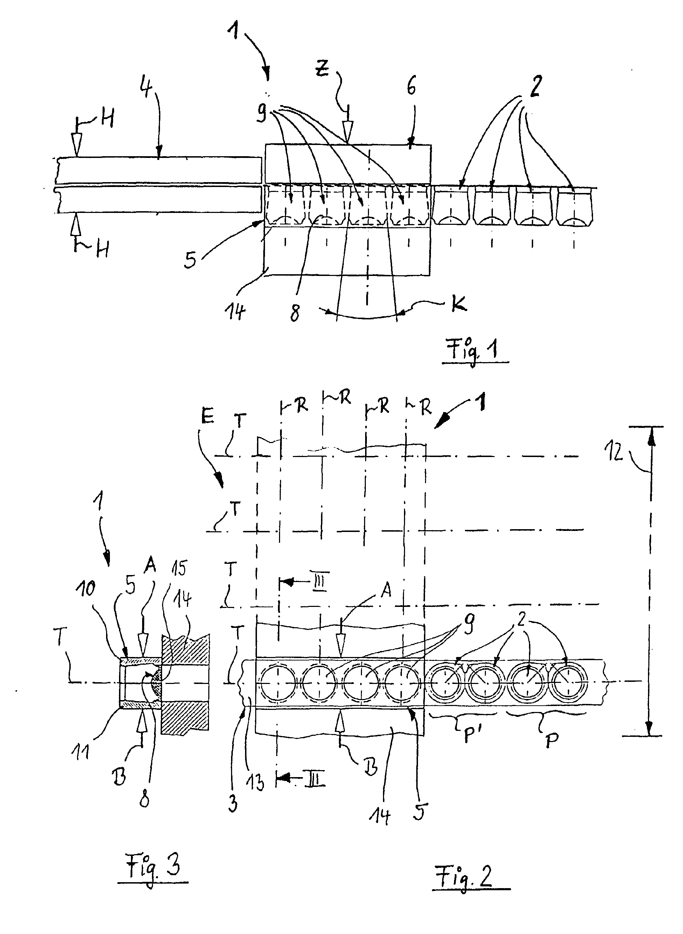

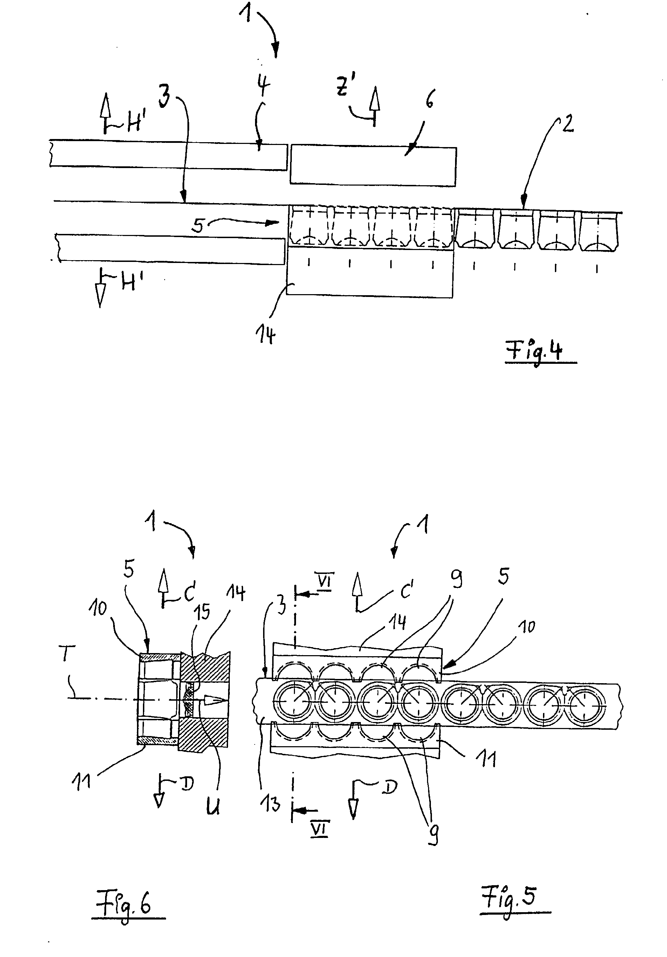

In Fig. 1 ist eine insgesamt mit 1 bezeichnete Maschine zum Tiefziehen von becherförmigen Behältern 2 in einer Kunststoffolienbahn 3 (Fig. 4) dargestellt, die eine insgesamt mit 4 bezeichnete Heizstation (Schließstellung: Pfeil H, Öffnungsbewegung: Pfeil H') in einer Laufrichtung F (Fig. 7) durchläuft und danach ein Formgehäuse 5 überläuft. Das oberseitig mit nicht näher dargestellten Formstempeln einer Formplatte 6 zusammenwirkende Formgehäuse 5 (Schließrichtung: Pfeil Z; Öffnungsrichtung: Pfeil Z') ist mit sich zum Boden 8 hin konisch (Winkel K; Fig. 1) erweiternden Formnestern 9 ausgebildet, wobei das Formgehäuse 5 (Fig. 5) in gegenläufig aufeinanderzu- bzw. auseinanderbewegbare (Pfeil A, B in Fig. 2 bzw. Pfeil C, D in Fig. 5) Gehäuseteile 10, 11 entlang einer vertikalen Teilungsebene T unterteilt ist, die mit einer gemeinsamen vertikalen Mittelebene der Formnester 9 zusammenfällt.

Die Draufsicht gemäß Fig. 2 verdeutlicht die erfindungsgemäße Ausbildung der Maschine 1, wobei diese mehrere Formgehäuse 5 aufweist, die eine jeweils parallel zur Laufrichtung F der Kunststoffolienbahn 3 ausgerichtete Teilungsebenen T aufweisen. Die Zusammenschau von Fig. 2 mit den Darstellungen gemäß Fig. 11 und 12 verdeutlicht, daß die Maschine 1 mehrere untereinander gleiche Formgehäuse 5 umfaßt, die nebeneinander mit den zueinander parallel ausgerichteten Teilungsebenen T angeordnet sind und gemeinsam eine Formeinheit E mit mehreren Becher-Reihen R bilden.

Für an sich bekannte Tiefziehmaschinen, die beispielsweise in ein zur Verpackung von Nahrungsmitteln vorgesehenes Füllwerk integriert sind, ist eine mit 12 bezeichnetes Maß als maximale Bearbeitungsbreite für die Kunststoffolien-bahn 4 vorgesehen. Ausgehend von dieser Breite 12 können in der erfindungsgemäßen Formmaschine 1 sechs bis zehn, vorzugsweise acht, Formgehäuse 5 über die Bearbeitungsbreite 12 verteilt angeordnet werden. Diese nebeneinander angeordneten Formgehäuse 5 können von einer gemeinsamen Folienbahn 3 überlaufen sein (nicht dargestellt), wobei jedoch der über einem Verschiebereich S (Fig. 11) der Gehäuseteile 10, 11 befindliche Bereich der einstückigen Kunststoffolien-Bahn unbearbeitet bleibt und am Ende der Förderstrecke als Abfall zu entsorgen ist.

Für eine weitgehend vollständige Ausnutzung des kostenintensiven Kunststoffolienmaterials 3 ist die Maschine 1 so ausgebildet, daß jedes der nebeneinander angeordneten Formgehäuse 5 von einem gesonderten Folienbahnstreifen 13 (Fig. 2, Fig. 12) überlaufen ist. Für jeden dieser Folienbahnstreifen 13 kann eine gesonderte Vorratsrolle (nicht dargestellt) vorgesehen sein und ebenso ist denkbar, daß die Folienbahnstreifen 13 durch Längsunterteilung einer von einer Kunststoffvorratsrolle ablaufenden einstückigen Kunststoffolienbahn gebildet sind.

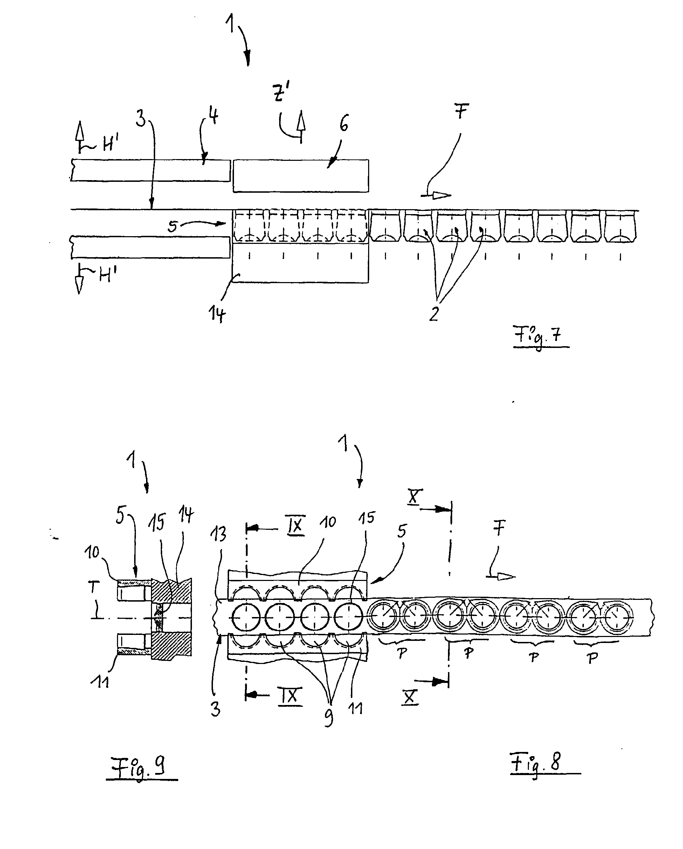

Die Schnittdarstellung gemäß Fig. 3 verdeutlicht in Zusammenschau mit Fig. 6 die Einzelheiten des Formgehäuses 5, wobei die beiden Gehäuseteile 10 und 11 gegenläufig beweglich auf einer Unterplatte 14 abgestützt sind und mittels eines nicht näher dargestellten Antriebs zwischen ihrer Schließstellung (Fig. 3) und ihrer Freigabestellung (Fig. 6) entsprechend den Pfeilrichtungen A, B und C, D verlagerbar sind. Ebenso ist denkbar, daß eines der Gehäuseteile 10 bzw. 11 beim Schließ- bzw. Freigabevorgang ortsfest verbleibt und das andere Gehäuseteil 10 bzw. 11 beweglich abgestützt ist, so daß dieses allein mittels eines Antriebs aus seiner Schließstellung in seine Freigabestellung überführt werden kann.

Die Draufsicht gemäß Fig. 2 zeigt, daß jedes Formgehäuse 5 mehrere in Bahnlaufrichtung F hintereinander angeordnete Formnester 9 aufweist, wobei in der dargestellten Ausführungsform vier Formnester vorgesehen sind und die Becher 2 am Ende des nicht näher dargestellten Füllwerkes paarweise (P, P') verpackt werden können.

Die Schnittdarstellungen gemäß Fig. 3, 6, 9 und 11 verdeutlichen die jeweiligen Formnester 9, die einen gesonderten, ungeteilten Bodenteil 15 aufweisen, an den die Gehäuseteile 10 und 11 bei ihrer Schließbewegung (Fig. 3) heran- und von dem die Gehäuseteile 10 und 11 bei ihrer Bewegung in Freigabestellung (Fig. 6, 11) hinwegbewegbar sind. Für die Weiterführung der geformten Becher 2 (Fig. 8) in der Freigabestellung der Maschine 1 ist das Bodenteil 15 abwärts bewegbar im Bereich der Unterplatte 14 abgestützt (Pfeil U, Fig. 6). Nach dem Absenken des Bodenteiles 15 kann der Becher 2 bzw. die Mehrzahl von Bechern (beispielsweise die vier Becher eines Taktes) ungehindert in Pfeilrichtung F bewegt werden. Danach werden Bodenteil 15 und die beiden Gehäuseteile 10 und 11 gleichzeitig bzw. nacheinander mittels der jeweiligen Antriebe in die Ausgangsstellung (Fig. 3) zurückbewegt und der nächste Formvorgang wird ausgeführt.

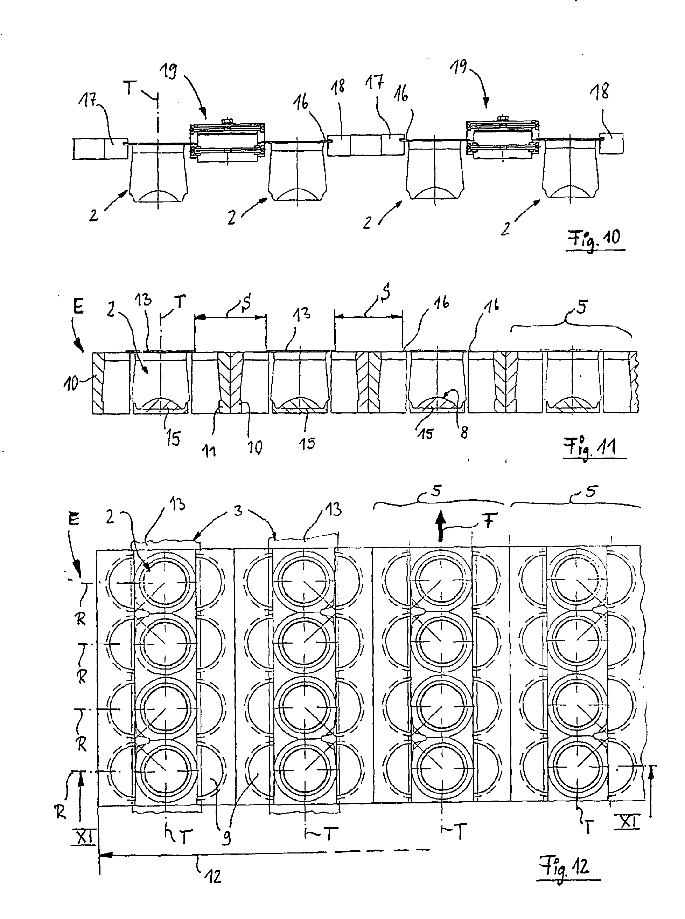

Die Schnittdarstellung gemäß Fig. 11 verdeutlicht, daß die Folienbahnstreifen 13 bzw. die daraus geformten Becher 2 zur Bewegung in Laufrichtung F in ihrem oberen Randbereich bei 16 geführt sind. In der Darstellung gemäß Fig. 10 sind jeweilige Führungsbauteile 17, 18 vorgesehen, die mit Folienzangen 19 so zusammenwirken, daß eine lagegenaue Bewegung der Kunststoffolienbahn 3 bzw. der Becher 2 erreicht wird.

Die in Fig. 12 mit Teilungsebene F dargestellten und jeweilige Quer-Reihen R bildenden Behälter-Längsreihen der nebeneinander angeordneten Formgehäusen 5 werden gemeinsam in der Laufrichtung F bewegt und beispielsweise nach dem Füllen in einer entsprechenden Becherfüllmaschine verschlossen, wobei ein gesonderter Deckelfolienbahnstreifen (nicht dargestellt) auf die Oberseite der Becher 2 zugeführt wird und diese versiegelt werden.

In einer weiteren denkbaren, nicht dargestellten Ausführungsform der Maschine 1 ist vorgesehen, daß jeder Reihe R von Formnestern 9 eine der Anzahl der Formnester 9 entsprechende Anzahl von Banderoliervorrichtungen zugeordnet ist, die als Gruppe in einer gemeinsamen Arbeitsebene nebeneinander angeordnet sind und das bei mehreren Reihen R in Formgehäusen 5 ausgebildeter Formnester 9 die diesen Reihen R zugeordneten Gruppen von Banderoliervorrichtungen in zumindest zwei unterschiedlichen Arbeitsebenen angeordnet sind.

## Patentansprüche

1. Maschine zum Tiefziehen von becherförmigen Behältern (2) in einer Kunststoffolienbahn (3), mit einem oberseitig von der Kunststoffolienbahn (3) überlaufenen Formgehäuse (5), in dem in Reihe angeordnete, sich zum Boden (8) hin konisch erweiternde und/oder zumindest eine Hinterschneidung aufweisende Formnester (9) ausgebildet sind, wobei das Formgehäuse (5) in gegenläufig auseinander- und aufeinanderzubewegbare Gehäuseteile (10,11) entlang einer vertikalen Teilungsebene (T) unterteilt ist, die mit einer gemeinsamen vertikalen Mittelebene der Formnester (9) zusammenfällt, **dadurch gekennzeichnet,** daß die Teilungsebene (T) des Formgehäuses (5) parallel zur Laufrichtung (F) der Kunststoffolienbahn (3) ausgerichtet ist.

2. Maschine nach Anspruch 1, **dadurch gekennzeichnet,** daß sie mehrere untereinander gleiche Formgehäuse (5) umfaßt, die nebeneinander mit zueinander parallel ausgerichteten Teilungsebenen (T) angeordnet sind und gemeinsam eine Formeinheit (E) bilden.

3. Vorrichtung nach Anspruch2, **dadurch gekennzeichnet**, daß sechs bis zehn, vorzugsweise acht Formgehäuse (5) die Formeinheit (E) bilden.

4. Maschine nach einem der Ansprüche 1 bis 3, **dadurch gekennzeichnet,** daß die nebeneinander angeordneten Formgehäuse (5) von einer gemeinsamen Folienbahn (3) überlaufen sind.

5. Maschine nach einem der Ansprüche 1 bis 3, **dadurch gekennzeichnet,** daß jedes der nebeneinander angeordneten Formgehäuse (5) von einem gesonderten Folienbahnstreifen (13) überlaufen ist.

6. Maschine nach Anspruch 5, **dadurch gekennzeichnet,** daß für jeden Folienbahnstreifen (13) eine gesonderte Vorratsrolle vorgesehen ist.

7. Maschine nach Anspruch 5, **dadurch** **gekennzeichnet,** daß die Folienbahnstreifen (13) durch Längsunterteilung einer von einer Kunststoffvorratsrolle ablaufenden Kunststoffolienbahn gebildet sind.

8. Maschine nach einem der Ansprüche 1 bis 7, **dadurch gekennzeichnet,** daß beide Gehäuseteile (10,11) gegenläufig beweglich abgestützt und mittels eines Antriebs zwischen ihrer Schließstellung (A,B) und ihrer Freigabestellung (C,D) bewegbar sind.

9. Maschine nach einem der Ansprüche 1 bis 8, **dadurch gekennzeichnet,** daß ein Gehäuseteil (10,11) beim Schließ- und Freigabevorgang ortsfest und ein Gehäuseteil beweglich abgestützt und mittels eines Antriebs aus seiner Schließstellung in seine Freigabestellung überführbar ist.

10. Maschine nach einem der Ansprüche 1 bis 9, **dadurch gekennzeichnet,** daß jedes Formgehäuses (5) zumindest zwei in Bahnlaufrichtung (F) hintereinander angeordnete Formnester (9) aufweist.

11. Maschine nach einem der Ansprüche 1 bis 10, **dadurch gekennzeichnet,** daß jedes Formnest (9) einen gesonderten, ungeteilten Bodenteil (15) aufweist an den die Gehäuseteile (10,11) bei ihrer Schließbewegung (A,B) heran- und von dem die Gehäuseteile (10,11) bei ihrer Bewegung in Freigabestellung (C,D) hinwegbewegbar sind.

12. Vorrichtung nach Anspruch 11, **dadurch gekennzeichnet,** daß das Bodenteil (15) auf-und abbewegbar (Pfeil U) abgestützt ist.

13. Maschine nach einem der Ansprüche 5 bis 12, **dadurch gekennzeichnet,** daß die Folienbahnstreifen (13) randseitig (bei 16) geführt sind.

14. Vorrichtung nach einem der Ansprüche 5 bis 12, **dadurch gekennzeichnet,** daß der Folienbahnstreifen (13) randseitig von Folienzangen (19) geführt und zwischen benachbarten Formgehäusen (5) doppelseitige Folienzangen (19) vorgesehen sind.

15. Maschine nach einem der Ansprüche 2 bis 14, **dadurch gekennzeichnet,** daß jeder der von den nebeneinander angeordneten Formgehäusen (5) erzeugten Behälterlängsreihen ein gesonderter Deckelfolienbahnstreifen zugeführt wird.

16. Maschine nach einem der Ansprüche 1 bis 15, **dadurch gekennzeichnet,** daß jeder Reihe von Formnestern (9) eine der Anzahl der Formnester (9) entsprechende Anzahl von Banderoliervorrichtungen zugeordnet ist, die als Gruppe in einer gemeinsamen Arbeitsebene nebeneinander angeordnet sind, und daß bei in mehreren Reihen (R;R') im Formgehäuse (5) ausgebildeter Formnester (9) die diesen Reihen zugeordneten Gruppen von Banderoliervorrichtungen in zumindest zwei unterschiedlichen Arbeitsebenen angeordnet sind.
